# EUROPEAN PATENT APPLICATION

(11) **EP 4 391 174 A1**
(43) Date of publication of application: **26.06.2024**
(21) Application number: 22214498.2
(22) Date of filing: 19.12.2022
(51) Int. Cl.: H01M 50/207, H01M 50/242, H01M 50/249, H01M 50/367, H01M 50/289

(54) **MOUNTED BATTERY SYSTEM**

(71) Applicant: Rimac Technology LLC, 10431 Sveta Nedelja (HR)
(72) Inventor: GRACIN, Roko, 10000 Zagreb (HR)
(74) Representative: Hoffmann Eitle

(57) **Abstract**

There is provided a mounted battery system (100) comprising a battery assembly (110) and a battery mount (120). The battery assembly (110) comprises a plurality of cells arranged fixed relative to each other. The battery mount (120) comprises a mount base (130), a first portion (140) extending from the mount base (130), and a second portion (150) extending from the mount base (130). The battery assembly (110) is bonded to a first side (141) of the first portion (140) and to a first side (151) of the second portion (150) with an adhesive (145, 155), wherein the first side (141) of the first portion (140) is facing the first side (151) of the second portion (150), and wherein a gap is formed between the battery assembly (110) and the mount base (130).

## Description

### [Field]

Example aspects herein generally relate to the field of mounted battery systems and, more particularly, to mounted battery systems in electric vehicles.

### [Background]

Vehicles of various kinds can be driven by electrical means by drawing energy from an energy storage system. Such an energy storage system, in most cases, includes batteries either as the primary energy source of the system or as a contributary energy source of the system, such as in a hybrid energy storage system. Where batteries are utilised in the energy storage system, it is often necessary to connect a plurality of (battery) cells in series and/or parallel to meet the high voltage and current requirements of the vehicle drive system. These connected cells should be securely mounted within the vehicle in a manner both appropriate for the vehicles operating conditions and that enables the cells to be repaired, replaced, inspected or tested, for example.

### [Summary]

The present inventor has devised, in accordance with a first example aspect herein, a mounted battery system comprising a battery assembly and a battery mount. The battery assembly comprises a plurality of cells arranged fixed relative to each other. The battery mount comprises a mount base, a first portion extending from the mount base, and a second portion extending from the mount base. The battery assembly is bonded to a first side of the first portion and to a first side of the second portion with an adhesive, wherein the first side of the first portion is facing the first side of the second portion, and wherein a gap is formed between the battery assembly and the mount base.

The present inventor has also devised, in accordance with a second example aspect herein, an electric vehicle comprising the mounted battery system according to the first example aspect herein.

### [Brief Description of the Drawings]

Example embodiments herein will now be explained in detail, by way of non-limiting example only, with reference to the accompanying figures described below. Like reference numerals appearing in different figures can denote identical or functionally similar elements, unless indicated otherwise.
Figs. 1A and 1B are schematic illustrations of a front-view and top-view of mounted battery system 100, respectively, according to first example embodiment herein.
Fig. 2 is a schematic illustration of battery assembly 200 employed in the first example embodiment herein.
Fig. 3 is a schematic illustration of battery assembly 300 which comprises the elements of the mounted battery system 100 and optional supporting elements 310, 320.
Fig. 4A is a schematic illustration of a front-view of mounted battery system 400 which comprises the elements of the mounted battery system 100 and an optional cover 410.
Fig. 4B is a schematic illustration of a portion of a top-view of mounted battery system 400 with the cover 410 removed.
Fig. 5A is a schematic illustration of spacing elements 502, 504, 506, 508 which extend from battery assembly 110 according to the first example embodiment herein.
Fig. 5B is a schematic illustration of spacing element 506 when battery assembly 110 is inserted into battery mount 120 according to the first example embodiment herein.
Fig. 5C is a schematic illustration of optional jig 560 comprising alternative spacing elements 562, 564, 566, 568.
Fig. 5D is a schematic illustration of alternative spacing element 562 when battery assembly 110 is inserted into battery mount 120 with optional jig 560.
Figs. 6A and 6B are schematic illustrations of a front-view and top-view of mounted battery system 600, respectively, according to a second example embodiment herein.
Fig. 7 is a schematic illustration of mounted battery system 700 comprising decoupling element 710 according to a third example embodiment herein.
Fig. 8 is a schematic illustration of mounted battery system 800 comprising a hollow 810 for decoupling element 710.

### [Detailed Description of Embodiments]

In view of the above-described need for a means of securely mounting connected cells within a vehicle, the present inventor proposes a mounted battery system wherein battery assemblies, comprising a plurality of cells fixed relative to each other, are bonded to a battery mount with an adhesive.

By the battery assemblies comprising a plurality of cells fixed relative to each other, the battery mounted system is modular in nature. This has advantages for serviceability and flexibility, as each respective battery assembly can be easily removed from the others in the mounted battery system such that it can be repaired, replaced, inspected or tested, for example.

By the use of adhesive to bond the battery assemblies to the battery mount, the battery assemblies are secured in position within the vehicle in a manner that can withstand the loads induced by the vehicle operating conditions, such as vibrations and shocks which may pass through the vehicle during testing or when it is in use. Further, under these conditions, the use of adhesive minimises the prevalence of localised concentrations of stress and strain between the battery assemblies and mount as compared to, for example, conventional battery mounting systems that use fasteners such as rivet, bolts or screws. In addition, by this use of adhesive instead of fasteners, the proposed mounted battery system has a reduced component count, a reduced weight, a reduced risk of loose parts, a reduced assembly time, improved noise, vibration and harshness (NVH) characteristics both due to the damping properties of the adhesive and the removal of the potential rattling caused by the use of fasteners and a reduced/removed risk of the galvanic corrosion issues associated with fasteners.

The use of adhesive also provides advantages based on available adhesive properties, such as the wide range of mechanical properties available allowing the alteration of the mounted battery system's intrinsic stiffness to achieve a desired performance, or the range of coefficients of thermal expansion (CTE) both facilitating improved thermal transfer between the battery assemblies and the battery mount, and improvements in the management of thermal expansion within the mounted battery system.

Example embodiments of the aforementioned mounted battery system, comprising a battery assembly bonded to a battery mount with an adhesive, will now be described in detail with reference to accompanying drawings.

Further, an example embodiment which provides a decoupling element to facilitate easy removal of the battery assemblies from the mounted battery system will later be described in detail with reference to additional accompanying drawings.

### [First Example Embodiment]

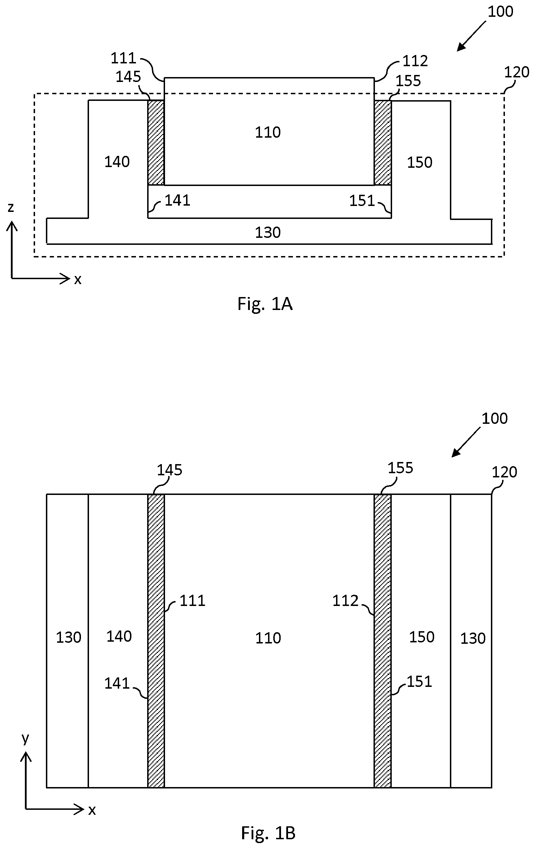

Fig. 1 is a schematic illustration of a mounted battery system 100 according to a first example embodiment. Fig. 1A shows a front view of the mounted battery system 100 in the x-z plane and Fig. 1B shows a top view of the mounted battery system 100 in the x-y plane. The mounted battery system comprises a battery assembly 110 and a battery mount 120. The battery assembly 110 is bonded to the battery mount 120 with an adhesive 145, 155.

The battery assembly 110 comprises a plurality of (battery) cells arranged fixed relative to each other. That is, the plurality of cells are secured together such that the geometric relationship between each of the cells is fixed. The battery assembly 110 may, as in the present example embodiment, have a first assembly side 111 and a second assembly side 112 and may have a cuboidal shape. However, the battery assembly 110 may alternatively take any shape, such as a trapezoidal prism or a cylinder. In such cases, the first assembly side 111 and the secondary assembly side 112 may instead be a first assembly portion and a second assembly portion, wherein each respective assembly portion is that adjacent to a respective portion of the battery mount 120 to which the battery assembly 110 is bonded (i.e., the respective assembly portions may be portions on the battery assembly 110 to which an adhesive is applied to bond the battery assembly 110 to the battery mount 120).

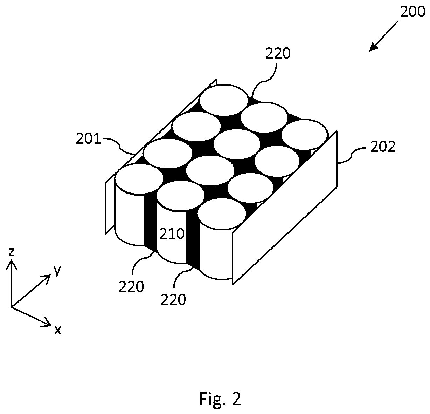

Fig. 2 is a schematic illustration of a battery assembly 200 which may, as in the present example embodiment, be the battery assembly 110. The battery assembly 200 comprises a plurality of cylindrical cells 210, each orientated with their respective axial direction in the z-direction. However, the cells may take any shape (i.e., cuboidal) and may be orientated in alternative ways, such as each cell being orientated with its axial direction in the x-direction or each cell having its axial direction at a tilt to the z-direction. The plurality of cells 210 may be arranged in a uniform block, as shown by way of example in Fig. 2 as three cells in a row in the x-direction and 4 of said rows in the y-direction. However, any number of cells may be arranged within the battery assembly 200 in any geometric pattern and the cells may be placed above each other in the z-direction if desired. The plurality of cells may be electrically connected in series and/or parallel by interconnectors (not shown), which may be provided on either side of the battery assembly in the z-direction in the uniform block depicted, or elsewhere as appropriate for alternative arrangements of the plurality of cells, such as where the cells are orientated with their axis in the x-direction. The battery assembly 200 comprises a potting medium 220, wherein the plurality of cells 210 are arranged fixed relative to each other by the potting medium 220 bonding the plurality of cells 210 together (i.e., such they are fixed relative to each other). For example, the potting medium 220 may be a polyurethane foam, an epoxy structural foam or may comprise an expanding material in combination with an adhesive. However, this may also be achieved in other ways with or without the potting medium 220, such as the battery assembly further comprising a cell holder arranged to fix the cells relative to each other (i.e., a frame with cell shaped indentations to receive each cell of the plurality of cells, or a frame arranged to hold a potting medium, such as silicone, which secures the cells relative to each other).

The battery assembly 200 further comprises a housing arranged to accommodate the plurality of cells. The housing comprises a first housing side 201 (as the first assembly side 111) and a second housing side 202 (as the second assembly side 112). The second housing side 202 opposes the first housing side 201 (in the x-direction). The housing sides 201, 202 may be secured to their respective sides of the plurality of cells with the potting medium 220, an adhesive or fasteners. Further, the first housing side 201 and the second housing side 202 may extend from battery assembly 110 (i.e., extend below the base of the plurality of cells) to contact the mount base 130 when the battery assembly 110 is bonded to the battery mount 120. The housing may enclose the plurality of cells, which may be achieved by the provision of four additional sides each joining a respective edge of the first housing side 201 and the second housing side 202. However, the housing of battery assembly 200 is entirely optional and may be removed, in which case the first assembly side 111 and the second assembly side 112 are formed by the exteriors of the cells 210 and/or the potting medium 220 on either respective side of the battery assembly 110 (in the x-direction).

Returning to Fig. 1, the battery mount 120 comprises a mount base 130, a first portion 140 (of the battery mount 120) and a second portion 150 (of the battery mount 120). The first and second portion 140, 150 extend (or protrude) from the mount base 130 (in the z-direction). The first portion 140 and second portion 150 may, as in the present example embodiment, be distinct parts of the battery mount 120 (and so distinct parts to the mount base 130) which are connected to the mount base 130 by way of an adhesive, welding, fasteners or otherwise. Further, the first portion 140 and the second portion 150 may be formed from a differing material to the mount base 130. Alternatively, the first portion 140 and/or the second portion 150 may be portions of the mount base 130 and may form a single piece of material with the mount base 130 (i.e., the first portion 140, the second portion 150 and the mount base 130 form a common piece of material, such as by being produced by a manufacturing process like injection moulding).

The mount base 130 may, as in the present example embodiment, be a flat plate (shown lying in the x-y plane of Fig. 1). The mount base 130 need not be a flat plate however but may instead be curved or have central portion which forms a plane at a lower level in the z-direction such that a channel is formed in the mount base 130 between the first portion 140 and the second portion 150.

The first portion 140 comprises a first side 141 and the second portion 150 comprises a first side 151, wherein the first side 141 of the first portion 140 is facing the first side 151 of the second portion 150. In other words, the first side 141 of the first portion 140 is the nearest opposing side of the first portion 140 to the first side 151 of the second portion 150 (in the x-direction). The first assembly side 111 and the second assembly side 112 may, as in the present example embodiment, face the first side 141 of the first portion 140 and the first side 151 of the second portion 150, respectively. The first side 141 of the first portion 140 and the first side 151 of the second portion 150 may, as in the present example embodiment, extend in a first direction which is parallel to the mount base 130. That is, the first side 141 of the first portion 140 may extend along an axial direction of the first portion 140 which is parallel to the mount base 130 (the x-y plane) and the first side 151 of the second portion 150 may extend along an axial direction of the second portion 150 which is parallel to both the mount base 130 (the x-y plane) and the axial direction of the first portion 140. The first side 141 of the first portion 140 and the first side 151 of the second portion 150 may form a recess between the first side 141 of the first portion 140, the first side 151 of the second portion 150 and the mount base 130.

The height of the first side 141 of the first portion 140 from the mount base 130 and the height of the first side 151 of the second portion 150 from the mount base 130 may, as in the present example embodiment, be at least 75 % of the height of the battery assembly 110 from the mount base 130. The height of the first sides 141, 151 of the first portion 140 and the second portion 150 and the height of the battery assembly 110 may be in a direction normal to a surface of the mount base 130 (i.e., in the z-direction from an x-y plane on the upper surface of the mount base 130). The heights of the first sides 141, 151 of the first and second portions 140, 150 may however take any values, which may be the same as, or be different from, each other. For example, the height of the first side 141 of the first portion 140 from the mount base 130 and the height of the first side 151 of the second portion 150 from the mount base 130 may be equal to (or greater than, or greater than 30 % of) the height of the battery assembly 110 from the mount base 130, or may be less than (or less than half of) the height of the battery assembly 110 from the mount base 130. Further, the heights of the first sides 141, 151 of the first and second portions 140, 150 may alternatively be at least 75% of, equal to (or greater than, or greater than 30 % of) or less than (or less than half of) the height of the battery module 110 measured from base to top of the battery module 110 (in the z-direction), or at least 75% of, equal to (or greater than, or greater than 30 % of) or less than (or less than half of) the length of one, or both, of the first assembly side 111 and the second assembly side 112 in the direction normal to the surface of the mount base 130 (i.e., in the z-direction).

The height of the first side 141 of the first portion 140 and the height of the first side 151 of the second portion 150 may be selected to minimise the use of material within the mounted battery system 100 for a particular desired joint strength (i.e., as dependent on the adhesive used) which reduces the weight of the mounted battery system 100. This is particularly important in electric vehicles as it improves the vehicle's efficiency and so mileage.

The first portion 140 and the second portion 150 may, as in the present example embodiment, be beams with axial directions which are parallel to each other and to the mount base 130. The beams may be straight (cross) beams, and may have the same, or differing, rectangular cross-sections. However, the beams may also be curved and may have cross-sections of other shapes, such as a trapezium or semi-circle. Accordingly, in some cases, the first side 141 of the first portion 140 and the first side 151 of the second portion 150 may instead be a first section of the first portion 140 and a first section of the second portion 150, wherein each respective section is that adjacent to the respective assembly side of the battery assembly 110 to which it is bonded (i.e., the respective sections may be sections of each respective portion 140, 150 to which an adhesive is applied to bond the battery assembly 110 to the battery mount 120). Whilst the first and second portion 140, 150 are shown and described here as beams, they may alternatively be any structural elements extending (or protruding) from the mount base 130 that are capable of being bonded to the battery assembly.

The battery assembly 110 is bonded to the first side 141 of the first portion 140 and to the first side 151 of the second portion 150 with an adhesive 145, 155 and a gap is formed between the battery assembly 110 and the mount base 130. In other words, the battery assembly is bonded to the first side 141 of the first portion 140 with an adhesive in a first zone of adhesion 145 and to the first side 151 of the second portion 150 with the adhesive in a second zone of adhesion 155 such that the gap is formed between the battery assembly 110 and the mount base 130. The first assembly side 111 and the second assembly side 112 may, as in the present example embodiment, be bonded to the first side 141 of the first portion 140 and to the first side 151 of the second portion 150 with the adhesive 145, 155, respectively, wherein the battery assembly 110 is bonded to the first side 141 of the first portion 140 by the first housing side 201 being bonded to the first side 141 of the first portion 140 with the adhesive (in the zone of adhesion 145), and wherein the battery assembly 110 is bonded to the first side 151 of the second portion 150 by the second housing side 202 being bonded to the first side 151 of the second portion 150 with the adhesive (in the zone of adhesion 155). However, where the housing is removed, the battery assembly 110 may be bonded to the first side 141 of the first portion 140 by the exteriors of the cells 210 and/or the potting medium 220 being bonded to the first side 141 of the first portion 140 with the adhesive (in the zone of adhesion 145), and the battery assembly 110 may be bonded to the first side 151 of the second portion 150 by the exteriors of the cells 210 and/or the potting medium 220 being bonded to the first side 151 of the second portion 150 with the adhesive (in the zone of adhesion 155). Further, any portion of the battery assembly 110 may be bonded to the first side 141 of the first portion 140 and to the first side 151 of the second portion 150, such as if the battery assembly 110 were cylindrical then portions of the cylinder nearest the first portion 140 and the second portion 150 would be bonded to the respective sides 141, 151 of the first and second portions 140, 150, as previously described.

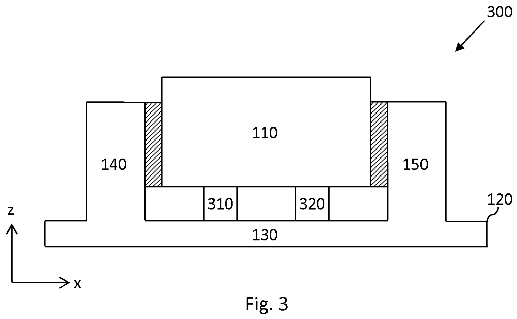

The battery assembly 110 may, as in the present example embodiment, be suspended between the first portion 140 and the second portion 150 such that there is no contact between the battery assembly 110 and the mount base 130. However, the mount base 130 may comprise a supporting portion which extends (or protrudes) from the mount base 130 within the gap formed between the battery assembly 110 and the mount base 130 and which is in contact with the battery assembly 110 (so as to support at least a part of the weight of the battery assembly 110). For example, the supporting portion may be a (cuboid) protrusion from the mount base 130 which is formed from a single piece of material with the mount base 130 (i.e., via a manufacturing process such as injection moulding). In other words, the protrusion and the mount base 130 form a common piece of material. Alternatively, or additionally, the mounted battery system 100 may comprise at least one supporting element within the gap formed between the battery assembly 110 and the mount base 130, and in contact with the battery assembly 110 and the mount base 130. The at least one supporting element may support, at least partially, the weight of battery assembly 110 and may be removable from the mounted battery system 100 such that it only supports the weight of the battery assembly 110 as the adhesive sets. A schematic illustration of an example battery assembly 300 is shown in Fig. 3 which comprises the battery assembly 100, a first supporting element 310 and a second supporting element 320 as described above, although any number of supporting elements which have any suitable geometry (i.e., cuboidal or cylindrical) may be used. The supporting elements may be made from a material with properties selected such that, in the event that the battery module receives an impact (i.e., if the vehicle within which the mounted battery system is installed crashes), the supporting elements crushes to absorb energy from the impact and so prevent damage to the battery assembly 110. For example, the supporting elements may be made from a thin polymer, a composite (i.e., of polyurethane foam and epoxy structural foam) or a structural foam (i.e., epoxy structural foam), which may have a yield strength selected such that they crush to absorb energy which would otherwise damage the battery assembly 110.

Further, as previously described, the first housing side 201 and the second housing side 202 may extend from battery assembly 110 to contact the mount base 130 when the battery assembly 110 is bonded to the battery mount 120. The first housing side 201 and the second housing side 202 may extend from battery assembly 110 along the length of the battery assembly 110 (in the y-direction) to contact the mount base 130 and form a first adhesive recess between the first housing side 201, the first portion 140 and the mount base 130, and a second adhesive recess between the second housing side 202, the second portion 150 and the mount base 130. By the provision of these recesses, the adhesive used to bond the battery assembly 110 to the respective sides 141, 151 of the respective portions 140, 150 can be injected into each recess to form each respective zone of adhesion 145, 155 and can be contained in place while setting, without the risk that it runs into the gap formed between the battery assembly 110 and the mount base 130, which improves both the speed of manufacture and the manufacturing reproducibility of the mounted battery system 100. Similar advantages may be achieved by the use of the aforementioned supporting elements, if they extend along the length of the battery assembly 110 (in the y-direction) and are placed to form a first adhesive recess between the battery assembly 110 (i.e., the first assembly side 111), a first such supporting element, the first portion 140 and the mount base 130, and a second adhesive recess between the battery assembly 110 (i.e., the second assembly side 112), a second such supporting element, the second portion 150 and the mount base 130. Such supporting elements may be removable once the adhesive has set.

The adhesive used to bond the battery assembly 110 to the respective sides 141, 151 of the respective portions 140, 150 of the battery mount 120 may be a self-expanding adhesive, a polyurethane foam or an epoxy structural foam.

The battery assembly 110 may, as in the present example embodiment, be bonded along the first side 141 of the first portion 140 in the aforementioned first direction (which is parallel to the mount base, i.e., the y-direction) with the adhesive 145 and the battery assembly 110 may be bonded along the first side 151 of the second portion 150 in the first direction with the adhesive 155 such that the gap between the battery assembly 110 and the battery mount 120 extends in the first direction to form a channel sealed by the adhesive which contains vent gases of the battery assembly 110 during thermal runaway of the battery assembly 110. In other words, the channel is sealed by adhesive such that the vent gases of the battery assembly 110 cannot exit the channel within its sealed length (i.e., within where the battery assembly 110 is bonded to the first and second portions 140, 150). The battery assembly 110 may be bonded along its full length on the first assembly side 111 and the second assembly side 112 (in the y-direction) such that the sealed channel is sealed along the entire length of the battery assembly 110 (in the y-direction). However, the battery assembly 110 may alternatively be bonded to the first side 141 of the first portion 140 and the first side 151 of the second portion 150 at any point, or points, along the respective sides such as, for example, in a patterned manner to save adhesive.

The battery assembly 110 may, as in the present example embodiment, be arranged such that, in the event of thermal runaway of the battery assembly 110, the vent gases of the battery assembly 110 are directed into the aforementioned sealed channel. This may be achieved, as in the present example embodiment of the battery assembly 200 in Fig. 2, by each of the plurality of cells 210 having its respective vent gas port on the side of each cell adjacent to the sealed channel (i.e., the lower side of the battery assembly in the z-direction). However, other arrangements may be used to direct the vent gases of the battery assembly 110 to the sealed channel. For example, in the case where the battery assembly is fully enclosed on all sides by a housing, the vent gases of the plurality of cells 210 may to channelled to an outlet port in the housing which directs the vent gases into the sealed channel.

The mounted battery system 100 may further comprise a cover which encloses a space adjacent to the battery mount 120 when connected to the battery mount 120. The space adjacent to the battery mount 120 may be a continuous space above (in the z-direction) and adjacent to the first portion 140, the second portion 150 and the battery assembly 110. The cover may further be arranged such that either, or both, ends of the sealed channel are closed by the cover. The sealed channel may have at least one outlet in either of the cover and/or the mount base 130 such that the vent gases of the battery assembly 110 flow out of the at least one outlet during thermal runaway of the battery assembly 110. The at least one outlet may be a valve which opens once a threshold pressure is reached, or may alternatively be a hole. The at least one outlet may be connected to external tubing, for example, to remove the vent gases from the wider vehicle. Where no cover is included, the sealed channel may comprise the above-mentioned at least one outlet in the mount base 130 such that the vent gases of the battery assembly 110 can flow out of the at least one outlet during thermal runaway of the battery assembly 110. For example, the outlets may instead be placed in the mount base 130 at either end of the battery assembly 110, such that the thermal runaway gases can be actively removed from the mounted battery system 300 before they reach the end of the sealed channel (i.e., if they are emitted from the battery assembly 110 at a central point). Further, where no cover is included, the sealed channel may be closed by way of a sealant or otherwise at either end of the battery assembly 110 such that the vent gases of the battery assembly 110 within the sealed channel can only exit the sealed channel through the at least one outlet in the mount base 130.

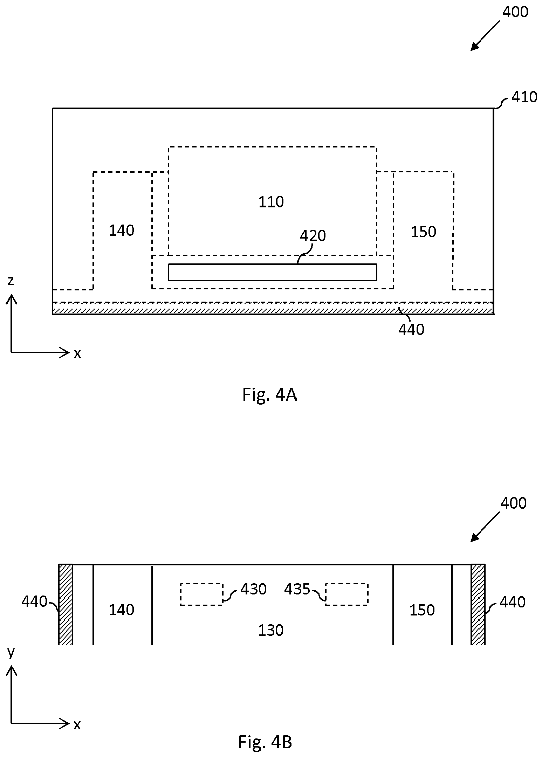

Figs. 4A and 4B show a schematic illustration of a front view in the x-z plane and a side view in the x-y plane, respectively, of an example mounted battery system 400 which comprises a cover 410 connected to the aforementioned mounted battery system 100. The cover 410 is connected to the mount base 130 along the dashed regions 440 in Fig. 4B and extends beyond the mount base 130 in the y-direction to be connected to dashed region 440 in Fig. 4A at either end of the mount base 130. The cover 410 has an outlet 420 (i.e., a hole) at one end of the sealed channel and closes the sealed channel at the opposing end. The mount base 130 also has two outlets 430, 435 for the sealed channel. During thermal runaway of the battery, these outlets 420, 430, 435 allow the vent gases of the battery assembly to escape, or be ducted away, from the mounted battery system 400. Whilst the cover 410 and the outlets 420, 430, 435 are shown in a given arrangement in Fig. 4, any numbers of outlets may be used at varying positions and the cover 410 may be connected to mounted battery system 110 in other ways, such as being connected to the first portion 140 and the second portion 150. Further, the mount base 130 may extend in the y-direction such that the cover 410 can be connected to mount base 130 in this extended region.

By containing the vent gases of the battery assembly 110 in a sealed channel along the length of the battery assembly 110, the vent gases of the battery assembly 110 can be safely directed from the sealed channel away from the mounted battery system 100 before they impact on any other components within, or outside of, the mounted battery system 100. For example, in the case where the mounted battery system 100 has a cover (i.e., as in mounted battery system 400), the vent gases can be prevented from entering the enclosed space (i.e., the pack free volume) so they do not impact on any elements therein.

The mounted battery system 100 may, as in the present example embodiment, further comprise at least one spacing element extending (or protruding) from the first assembly side 111 and in contact with the first side 141 of the first portion 140 and at least one spacing element extending (or protruding) from the second assembly side 112 and in contact with the first side 151 of the second portion 150 (not shown in Fig. 1 or Fig. 2). These spacing elements are arranged such that a distance between the first assembly side 111 and the first side 141 of the first portion 140 and a distance between the second assembly side 112 and the first side 151 of the second portion 150 are set by the geometry of the respective at least one spacing elements (i.e., a distance between the first assembly side 111 and the first side 141 of the first portion 140 is set by the geometry of the at least one spacing element extending from the first assembly side 111 and in contact with the first side 141 of the first portion 140, and a distance between the second assembly side 112 and the first side 151 of the second portion 150 is set by the geometry of at least one spacing element extending from the second assembly side 112 and in contact with the first side 151 of the second portion 150). The at least one spacing element extending from the first assembly side 111 and in contact with the first side 141 of the first portion 140 may optionally be in a state of compression, as may the at least one spacing element extending from the second assembly side 112 and in contact with the first side 151 of the second portion 150 (i.e., when the battery assembly 110 is placed within the battery mount 120 at its position to be bonded at). This state of compression may advantageously aid in holding the battery assembly 110 in place as the adhesive sets between the battery assembly 110 and the battery mount 120. These spacing elements are entirely optional and may be omitted from the mounted battery system 100.

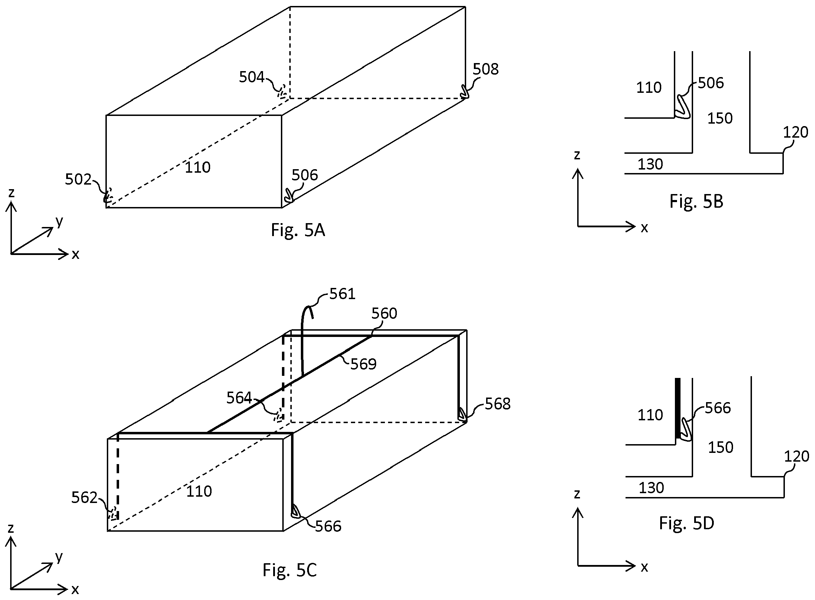

A schematic illustration of the spacing elements which may, as in the present example embodiment, be used are shown in Fig. 5A (which are not shown in the other figures). The battery assembly 110 comprises four spacing elements 502, 504, 506 and 508, where two spacing elements 502, 504 are on the first assembly side 111 and two spacing elements 506, 508 are on the second assembly side 112. However, any number of spacing elements may be used. The spacing elements 502, 504, 506, 508 may, as in the present example embodiment, be wires bent such that they compress when the battery assembly 110 is placed between the first side 141 of the first portion 140 and the first side 151 of the second portion 150, but they may also be springs, for example. The spacing elements 502, 504, 506, 508 may, as in the present example embodiment, be connected to their respective assembly sides with an adhesive, fasteners or otherwise. However, they may also be provided in the form of a removable jig 560 as illustrated in Fig. 5C. In this case, the equivalent spacing elements 562, 564, 566, 568 extend from their respective assembly sides 111, 112 when the jig 560 is placed around the battery assembly 110. The jig 560 is removable, such that it may be used to position the battery assembly 110 in the battery mount 120 until the adhesive bonding the battery assembly 110 and the battery mount 120 sets. The use of the jig 560 allows the aforementioned advantages of the spacing elements to be realised while at the same time allowing their removal, which may have the same, or similar, advantages as described above with respect to replacing the fasteners of conventional mounted battery systems with an adhesive to bond the battery assembly 110 to the battery mount 120 (i.e., the removal of points of stress and strain concentration, realising weight savings or the reduced/removed risk of galvanic corrosion issues).

An enlarged illustration of spacing element 506 in Fig. 5A is shown in Fig. 5B whereby the battery assembly 110 is placed within the battery mount 120. The spacing element 506 is in connected to the second assembly side 112 and is in contact with the first side 151 of the second portion 150 such that the distance between the second assembly side 112 and the first side 151 of the second portion 150 at the position of the spacing element 506 is set by the length of the spacing element 506 in the x-direction.

An enlarged illustration of alternative spacing element 566 in Fig. 5C is shown in Fig. 5D whereby the battery assembly 110 is placed within the battery mount 120. The spacing element 566 is held in contact with the second assembly side 112 by the jig 560 and is in contact with the first side 151 of the second portion 150 such that the distance between the second assembly side 112 and the first side 151 of the second portion 150 at the position of the spacing element 566 is set by the length of the spacing element 566 in the x-direction.

### [Second Example Embodiment]

The advantages associated with the above-described first example embodiment may be accentuated by extending the mounted battery system 100 to include a plurality of battery assemblies. In particular, the above-described advantages of a reduced weight, a reduced risk of loose parts and a reduced assembly time are all improved by scaling the principles of first example embodiment to apply to a plurality of battery assemblies within such a mounted battery system.

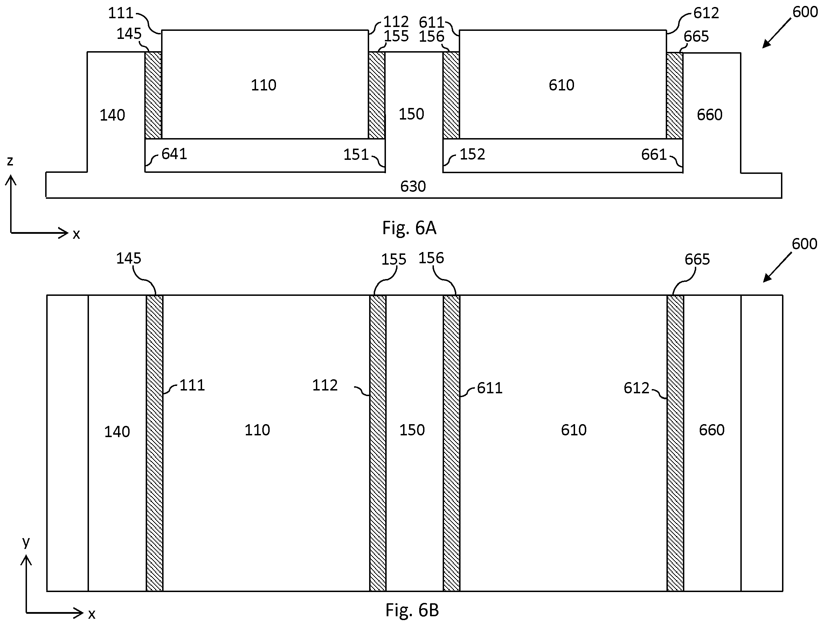

A second example embodiment of a mounted battery system, which has a plurality of battery assemblies as described briefly above, will now be described in more detail with reference to Fig. 6. Elements in Fig. 6, which have the same reference numerals as those described previously, are the same, and foregoing description of these elements will not be repeated.

Fig. 6 is a schematic illustration of a mounted battery system 600 according to the second example embodiment. Figs. 6A and 6B are schematic illustrations of a front view in the x-z plane and a side view in the x-y plane, respectively, of the mounted battery system 600 which has a plurality of battery assemblies 110, 610. The battery assembly 110 is the same as that described in the first example embodiment and is bonded to the first portion 140 and the second portion 150 in the same manner. The second battery assembly 610 may have the same features and/or alternatives as described with the first battery assembly 110. For example, the second battery assembly may be that described with reference to Fig. 2 or may include the spacing elements described with reference to Fig. 4.

The battery mount 620 of the present example embodiment comprises the first portion 140, the second portion 150, a third portion 660 and a mount base 630. The first portion 140 (of the battery mount 620) is that of the first example embodiment and comprises a first side 141. The second portion 150 (of the battery mount 620) is that of the first example embodiment and comprises a first side 151, but additionally comprises a second side 152. The first side 151 of the second portion 150 opposes the second side 152 of the second portion 150 (in the x direction). The third portion 660 (of the battery mount 620) comprises a first side 661 of the third portion 660 and may have the same features and/or alternatives as the first and second portions 140, 150 of the first example embodiment. The first side 661 of the third portion 660 is facing the second side 152 of the second portion 150. The mount base 630 is the same as mount base 130 of the first example embodiment but differs in being extended in the x-direction to accommodate the second battery assembly 610 and the third portion 660.

The second battery assembly 610 is bonded to the second side 152 of the second portion 150 (in a third zone of adhesion 156) and to the first side 661 of the third portion 660 (in a fourth zone of adhesion 665) with an adhesive and a gap is formed between the second battery assembly 610 and the mount base 630, in the same manner as described for the first battery assembly 110 in the first example embodiment. For example, the sealed channel, the supporting elements and the supporting portions (i.e., as described with reference to Fig. 1 and Fig. 3) may be formed along, or included in, the gap formed between the second battery assembly 660 and the mount base 630, respectively, as in the first example embodiment.

The mounted battery system 600 may comprise a cover with the same features and/or alternatives as described in the first example embodiment. The cover differs from that in the first example embodiment by being extended to enclose the second battery assembly 610.

While the present example embodiment has been described with respect to a first battery assembly 110 and a second battery assembly 610, it may be extended to any number of battery assemblies. In such a case, the mount base may be extended to include an additional portion extending from the mount base for each additional battery assembly (i.e., N portions for N-1 battery assemblies in the x-direction), which may be bonded to the previous and additional portion in the above-described manner. However, the mount base 630 may also be extended to accommodate longer portions extending from the mount base (i.e., in the y-direction) such that multiple battery assemblies can be bonded to the same pair of portions of the mount base 630. For example, a third battery assembly may be bonded to the first side 141 of the first portion 140 and to the first side 151 of the second portion 150 with an adhesive (i.e., where the first portion 140 and the second portion 150 are extended in the y-direction to accommodate an additional battery assembly) and a gap formed between the third battery assembly and the mount base 630, in the manner described as in the first example embodiment. In such cases, the sealed channels described in the first example embodiment may continuously extend along this additional length of the pair of portions extending from the mount base and the cover may be extended to enclose all of the battery assemblies. Where a plurality of battery assemblies are employed, the mounted battery system may further comprise series and/or parallel electrical connections between the battery assemblies (not shown).

### [Third Example Embodiment]

The present inventor has also devised a mounted battery system which comprises a decoupling element arranged to cut through at least a part of an adhesive which bonds a battery assembly to a battery mount. By the provision of this decoupling element, the bond between the battery assembly and battery mount can be weakened or broken such that the battery assembly can be easily removed from the mounted battery system, which improves the systems serviceability. Further, by weakening or breaking the bond in a controlled manner, the risk of damage to other components in the system is reduced.

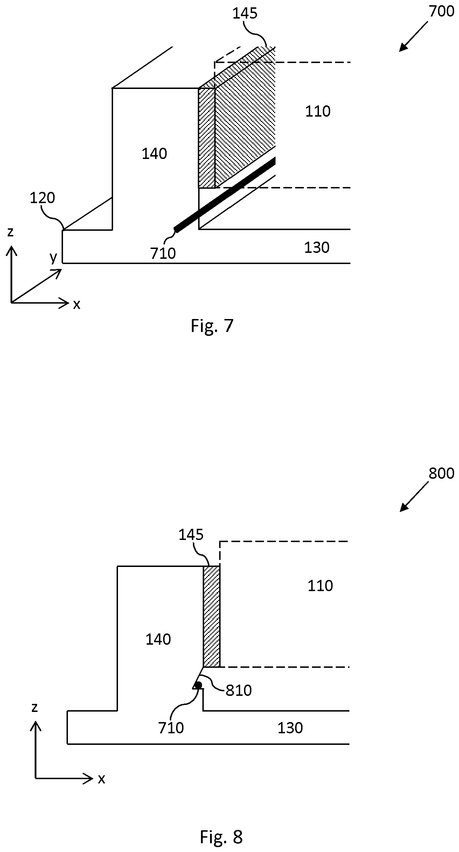

A third example embodiment of a mounted battery system, which has a decoupling element as described briefly above, will now be described in more detail with reference to Fig. 7. Elements in Fig. 7, which have the same reference numerals as those described previously, are the same, and foregoing description of these elements will not be repeated.

Fig. 7 is a schematic illustration of a mounted battery system 700 comprising a battery assembly 110 (shown as transparent by way of a dashed line for ease of viewing only), a battery mount 120 and a decoupling element 710. The battery assembly 110 comprises a plurality of cells arranged fixed relative to each other, the battery mount 120 comprises a mount base 130 and a first portion 140 (of the battery mount 120) extending (or protruding) from the mount base 130 and the battery assembly 110 is bonded to the first portion 140 (in a first zone of adhesion 145) with an adhesive, as described in the first example embodiment. In the present example embodiment, it is not necessary that the mount base 130 has a second portion 150 to which the battery assembly 110 is bonded, and it is not required that a gap is formed between the battery assembly 110 and the mount base 130. For example, the battery assembly 110 may rest on the mount base 130 and may only be bonded to the first portion 140. Further, the battery assembly 110 may be bonded to any side or part of the first portion 140 instead of to the first side 141 of the first portion 140.

The decoupling element 710 is adjacent to the battery mount 120. The decoupling element 710 may, as in the present example embodiment, contact the first side 141 of the first portion 140 and may be beneath the first zone of adhesion 145. However, other arrangements of the decoupling element 710 are possible, such as the decoupling element 710 being arranged within the first zone of adhesion 145, or the decoupling element 710 contacting the first portion 140 elsewhere on the first side 141 of the first portion 140 as dependent upon where the battery assembly 110 is bonded to the first portion 140. The decoupling element 710 is depicted as a wire but may alternatively be any other suitable element such as a rod, for example.

The decoupling element 710 is arranged to cut through at least a part of the adhesive to weaken the bond between the battery assembly 110 and the first portion 140 under an application of force to the decoupling element 710. The decoupling element 710 may alternatively be arranged to cut through the adhesive to break the bond between the battery assembly 110 and the first portion 140 under the application of force to the decoupling element 710.

The application of force may, as in the present example embodiment, be to both a first end and a second end of the decoupling element 710. However, the first end of the decoupling element 710 may be secured to the battery mount 120 and the application of force may be to (only) the second end of the decoupling element 710. In such a case, the application of force causes the decoupling element 710 to pivot around the first secured end of the decoupling element 710, cutting the adhesive in the process.

The mounted battery system 700 may further comprise a hollow within which the decoupling element sits and through which the decoupling element can be inserted and/or removed while the battery assembly 110 is bonded to the first portion 140 with the adhesive. A schematic illustration of such a hollow is shown in Fig. 8 by mounted battery system 800, which is identical to mounted battery system 700 other than further comprising the optional hollow 810 within which the decoupling element 710 sits. The hollow 810 is shaped such that the decoupling element 710 can easily move out of the hollow 810 (in the z-direction) under the application of force, due to the slanted side, but other shapes are possible (i.e., a circular or triangular hollow). The hollow 810 is shown beneath the first zone of adhesion 145 but may equally sit within it. The provision of the hollow 810 is advantageous in allowing the decoupling element 710 to be both easily installed and easily replaced before and after its use.

The above-described arrangement of the decoupling element 710 may be repeated for any portion extending from the mount base 130 as described in the first and second example embodiments. In other words, the above-described decoupling element 710 may be duplicated for each zone of adhesion between a battery assembly and a respective portion extending from a mount base, so all (or some of) zones of adhesion can be cut by their respective decoupling element to achieve the above-described advantages.

An electric vehicle (i.e., an electric car, train or boat) may comprise the mounted battery system of any of the above-described embodiments and may use the batteries assemblies therein to power, at least in part, the vehicle drive system. In such cases, the mount base may be placed on the floor, or base, of the electric vehicle such that the mount base is nearest the ground beneath the vehicle and the battery assemblies are above the mount base. However, the mount base may also be held above the floor, or base, of the electric vehicle such that the battery assemblies are between the floor, or base, of the electric vehicle and the mount base (i.e., they are suspended beneath the mount base and the z-direction in the figures described herein points towards the ground).

In the foregoing description, example aspects are described with reference to several example embodiments. Accordingly, the specification should be regarded as illustrative. Similarly, the figures illustrated in the drawings, which highlight the functionality and advantages of the example embodiments, are presented for example purposes only. The architecture of the example embodiments is sufficiently flexible and configurable, such that it may be utilized (and navigated) in ways other than those shown in the accompanying figures.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that the procedures recited in the claims need not be performed in the order presented.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub combination.

Moreover, although features may be described above as acting in certain combinations and even initially claimed as such, one or more features from a claimed combination can in some cases be excised from the combination, and the claimed combination may be directed to a sub-combination or variation of a sub-combination.

Having now described some illustrative embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatus described herein may be embodied in other specific forms without departing from the characteristics thereof. The foregoing embodiments are illustrative rather than limiting of the described systems and methods. Scope of the apparatus described herein is thus indicated by the appended claims, rather than the foregoing description, and changes that come within the meaning and range of equivalency of the claims are embraced therein.

Further, the disclosure comprises the following clauses, whereby it is noted that the scope of protection is provided by the claims and not by these clauses:
Clause 1. A mounted battery system (100) comprising: a battery assembly (110) which comprises a plurality of cells arranged fixed relative to each other; and a battery mount (120) which comprises a mount base (130), a first portion (140) extending from the mount base (130), and a second portion (150) extending from the mount base (130); and wherein the battery assembly (110) is bonded to a first side (141) of the first portion (140) and to a first side (151) of the second portion (150) with an adhesive (145, 155), wherein the first side (141) of the first portion (140) is facing the first side (151) of the second portion (150), and wherein a gap is formed between the battery assembly (110) and the mount base (130).
Clause 2. The mounted battery system (100) of Clause 1, wherein the first side (141) of the first portion (140) and the first side (151) of the second portion (150) extend in a first direction which is parallel to the mount base (130) and wherein the battery assembly (110) is bonded along the first side (141) of the first portion (140) in the first direction with the adhesive and the battery assembly (110) is bonded along the first side (151) of the second portion (150) in the first direction with the adhesive such that the gap between the battery assembly (110) and the battery mount (120) extends in the first direction to form a channel sealed by the adhesive which contains vent gases of the battery assembly (110) during thermal runaway of the battery assembly (110).
Clause 3. The mounted battery system (100) of Clause 2, further comprising a cover (410) which encloses a space adjacent to the battery mount (120) when connected to the battery mount (120) and wherein the sealed channel has at least one outlet in either of the cover and/or the mount base (130) such that the vent gases of the battery assembly (110) flow out of the at least one outlet during thermal runaway of the battery assembly (110).
Clause 4. The mounted battery system (100) of any preceding clause, wherein the battery assembly (110) further comprises a housing arranged to accommodate the plurality of cells, wherein the housing comprises a first housing side (201) and a second housing side (202) which opposes the first housing side (201), and wherein the battery assembly (110) is bonded to the first side (141) of the first portion (140) by the first housing side (201) being bonded to the first side (141) of the first portion (140) with the adhesive and the battery assembly (110) is bonded to the first side (151) of the second portion (150) by the second housing side (202) being bonded to the first side (151) of the second portion (150) with the adhesive.
Clause 5. The mounted battery system (100) of Clause 4, wherein the first housing side (201) and the second housing side (202) extend from battery assembly (110) to contact the mount base (130) when the battery assembly (110) is bonded to the battery mount (120).
Clause 6. The mounted battery system (100) of any of Clauses 1 to 3, wherein the battery assembly (110) further comprises a potting medium (220), wherein the plurality of cells are arranged fixed relative to each other by the potting medium bonding the plurality of cells (210) together and wherein the battery assembly (110) is bonded to the first side (141) of the first portion (140) by exteriors of the cells (210) and/or the potting medium (220) being bonded to the first side (141) of the first portion (140) with the adhesive, and the battery assembly 110 is bonded to the first side (151) of the second portion (150) by exteriors of the cells 210 and/or the potting medium 220 being bonded to the first side (151) of the second portion (150) with the adhesive.
Clause 7. The mounted battery system (100) of any preceding clause, wherein the height of the first side (141) of the first portion (140) from the mount base (130) and the height of the first side (151) of the second portion (150) from the mount base (130) are at least 30 % of the height of the battery assembly (110) from the mount base (130).
Clause 8. The mounted battery system (100) of any preceding clause, wherein the height of the first side (141) of the first portion (140) from the mount base (130) and the height of the first side (151) of the second portion (150) from the mount base (130) are at least 75 % of the height of the battery assembly (110) from the mount base (130).
Clause 9. The mounted battery system (100) of any preceding clause, wherein the height of the first side (141) of the first portion (140) from the mount base (130) and the height of the first side (151) of the second portion (150) from the mount base (130) are equal to the height of the battery assembly (110) from the mount base (130).
Clause 10. The mounted battery system (100) of any preceding clause, wherein the battery assembly (110) has a first assembly side (111) facing the first side (141) of the first portion (140), a second assembly side (112) facing the first side (151) of the second portion (150) and wherein the mounted battery system (100) further comprises at least one spacing element (502, 504) extending from the first assembly side (111) and in contact with the first side (141) of the first portion (140) and at least one spacing element (506, 508) extending from the second assembly side (112) and in contact with the first side (151) of the second portion (150) such that a distance between the first assembly side (111) and the first side (141) of the first portion (140) and a distance between the second assembly side (112) and the first side (151) of the second portion (150) are set by the geometry of the respective at least one spacing elements (502, 504, 506, 508) .
Clause 11. The mounted battery system (100) of Clause 10, wherein the at least one spacing element (502, 504) extending from the first assembly side (111) and in contact with the first side (141) of the first portion (140) is in a state of compression.
Clause 12. The mounted battery system (100) of any preceding clause, further comprising at least one supporting element (310, 320) within the gap formed between the battery assembly (110) and the mount base (130) and in contact with the battery assembly (110) and the mount base (130).
Clause 13. The mounted battery system (100) of any preceding clause, wherein the mount base (130) comprises a supporting portion which extends from the mount base (130) within the gap formed between the battery assembly (110) and the mount base (130) and which is in contact with the battery assembly (110), wherein the supporting portion is a protrusion from the mount base (130) which is formed from a single piece of material with the mount base (130).
Clause 14. The mounted battery system (600) of any preceding clause, further comprising: a second battery assembly (610) which comprises a plurality of cells arranged fixed relative to each other; and wherein the battery mount (620) further comprises: a third portion (660) extending from the mount base (630); and wherein the second battery assembly (610) is bonded to a second side (152) of the second portion (150) and to a first side (661) of the third portion (660) with the adhesive, wherein the second side (152) of the second portion (150) is facing the first side (661) of the third portion (660), and wherein a gap is formed between the second battery assembly (610) and the mount base (630).
Clause 15. An electric vehicle comprising the mounted battery system (100, 600) of any preceding clause.
Clause 16. A mounted battery system (700) comprising: a battery assembly (110) which comprises a plurality of cells arranged fixed relative to each other; and a battery mount (120) which comprises a mount base (130) and a first portion (140) extending from the mount base (130); and wherein the battery assembly (110) is bonded to the first portion (140) with an adhesive; and the mounted battery system (700) further comprising a decoupling element (710) adjacent to the battery mount (120) and arranged to cut through at least a part of the adhesive to weaken the bond between the battery assembly (110) and the first portion (140) under an application of force to the decoupling element (710).
Clause 17. The mounted battery system (700) of Clause 16, wherein the application of force is to both a first end and a second end of the decoupling element (710).
Clause 18. The mounted battery system (700) of Clause 16, wherein a first end of the decoupling element (710) is secured to the battery mount (120) and the application of force is to a second end of the decoupling element (710).
Clause 19. The mounted battery system (800) of Clause 16, 17 or 18, wherein the battery mount (120) comprises a hollow (810) within which the decoupling element (710) sits and through which the decoupling element (710) can be inserted and/or removed while the battery assembly (110) is bonded to the first portion (140) with the adhesive.
Clause 20. The mounted battery system (700, 800) of any of Clauses 16 to 19, wherein the decoupling element (710) is arranged to cut through the adhesive to break the bond between the battery assembly (110) and the first portion (140) under the application of force to the decoupling element (710).
Clause 21. An electric vehicle comprising the mounted battery system (700, 800) of any of Clauses 16 to 20.

## Claims

1. A mounted battery system (100) comprising:
a battery assembly (110) which comprises a plurality of cells arranged fixed relative to each other; and
a battery mount (120) which comprises a mount base (130), a first portion (140) extending from the mount base (130), and a second portion (150) extending from the mount base (130); and
wherein the battery assembly (110) is bonded to a first side (141) of the first portion (140) and to a first side (151) of the second portion (150) with an adhesive (145, 155), wherein the first side (141) of the first portion (140) is facing the first side (151) of the second portion (150), and wherein a gap is formed between the battery assembly (110) and the mount base (130).

2. The mounted battery system (100) of Claim 1, wherein the first side (141) of the first portion (140) and the first side (151) of the second portion (150) extend in a first direction which is parallel to the mount base (130) and wherein the battery assembly (110) is bonded along the first side (141) of the first portion (140) in the first direction with the adhesive and the battery assembly (110) is bonded along the first side (151) of the second portion (150) in the first direction with the adhesive such that the gap between the battery assembly (110) and the battery mount (120) extends in the first direction to form a channel sealed by the adhesive which contains vent gases of the battery assembly (110) during thermal runaway of the battery assembly (110).

3. The mounted battery system (100) of Claim 2, further comprising a cover (410) which encloses a space adjacent to the battery mount (120) when connected to the battery mount (120) and wherein the sealed channel has at least one outlet in either of the cover and/or the mount base (130) such that the vent gases of the battery assembly (110) flow out of the at least one outlet during thermal runaway of the battery assembly (110).

4. The mounted battery system (100) of any preceding claim, wherein the battery assembly (110) further comprises a housing arranged to accommodate the plurality of cells, wherein the housing comprises a first housing side (201) and a second housing side (202) which opposes the first housing side (201), and wherein the battery assembly (110) is bonded to the first side (141) of the first portion (140) by the first housing side (201) being bonded to the first side (141) of the first portion (140) with the adhesive and the battery assembly (110) is bonded to the first side (151) of the second portion (150) by the second housing side (202) being bonded to the first side (151) of the second portion (150) with the adhesive.

5. The mounted battery system (100) of Claim 4, wherein the first housing side (201) and the second housing side (202) extend from battery assembly (110) to contact the mount base (130) when the battery assembly (110) is bonded to the battery mount (120).

6. The mounted battery system (100) of any of Claims 1 to 3, wherein the battery assembly (110) further comprises a potting medium (220), wherein the plurality of cells are arranged fixed relative to each other by the potting medium bonding the plurality of cells (210) together and wherein the battery assembly (110) is bonded to the first side (141) of the first portion (140) by exteriors of the cells (210) and/or the potting medium (220) being bonded to the first side (141) of the first portion (140) with the adhesive, and the battery assembly 110 is bonded to the first side (151) of the second portion (150) by exteriors of the cells 210 and/or the potting medium 220 being bonded to the first side (151) of the second portion (150) with the adhesive.

7. The mounted battery system (100) of any preceding claim, wherein the height of the first side (141) of the first portion (140) from the mount base (130) and the height of the first side (151) of the second portion (150) from the mount base (130) are at least 30 % of the height of the battery assembly (110) from the mount base (130).

8. The mounted battery system (100) of any preceding claim, wherein the height of the first side (141) of the first portion (140) from the mount base (130) and the height of the first side (151) of the second portion (150) from the mount base (130) are at least 75 % of the height of the battery assembly (110) from the mount base (130).

9. The mounted battery system (100) of any preceding claim, wherein the height of the first side (141) of the first portion (140) from the mount base (130) and the height of the first side (151) of the second portion (150) from the mount base (130) are equal to the height of the battery assembly (110) from the mount base (130).

10. The mounted battery system (100) of any preceding claim, wherein the battery assembly (110) has a first assembly side (111) facing the first side (141) of the first portion (140), a second assembly side (112) facing the first side (151) of the second portion (150) and wherein the mounted battery system (100) further comprises at least one spacing element (502, 504) extending from the first assembly side (111) and in contact with the first side (141) of the first portion (140) and at least one spacing element (506, 508) extending from the second assembly side (112) and in contact with the first side (151) of the second portion (150) such that a distance between the first assembly side (111) and the first side (141) of the first portion (140) and a distance between the second assembly side (112) and the first side (151) of the second portion (150) are set by the geometry of the respective at least one spacing elements (502, 504, 506, 508) .

11. The mounted battery system (100) of Claim 10, wherein the at least one spacing element (502, 504) extending from the first assembly side (111) and in contact with the first side (141) of the first portion (140) is in a state of compression.

12. The mounted battery system (100) of any preceding claim, further comprising at least one supporting element (310, 320) within the gap formed between the battery assembly (110) and the mount base (130) and in contact with the battery assembly (110) and the mount base (130).

13. The mounted battery system (100) of any preceding claim, wherein the mount base (130) comprises a supporting portion which extends from the mount base (130) within the gap formed between the battery assembly (110) and the mount base (130) and which is in contact with the battery assembly (110), wherein the supporting portion is a protrusion from the mount base (130) which is formed from a single piece of material with the mount base (130).

14. The mounted battery system (600) of any preceding claim, further comprising:
a second battery assembly (610) which comprises a plurality of cells arranged fixed relative to each other; and
wherein the battery mount (620) further comprises:
a third portion (660) extending from the mount base (630);
and wherein the second battery assembly (610) is bonded to a second side (152) of the second portion (150) and to a first side (661) of the third portion (660) with the adhesive, wherein the second side (152) of the second portion (150) is facing the first side (661) of the third portion (660), and wherein a gap is formed between the second battery assembly (610) and the mount base (630).

15. An electric vehicle comprising the mounted battery system (100, 600) of any preceding claim.
